# DEMANDE DE BREVET EUROPEEN

(11) **EP 4 844 655 A1**
(43) Date de publication de la demande: **25.11.2026**
(21) Numéro de dépôt: 25305732.7
(22) Date de dépôt: 21.05.2025
(51) Int. Cl.: G06Q 10/10, G06F 16/30, G06F 40/30, G06N 3/08

(54) **PROCEDE ET DISPOSITIF D'ENTRAINEMENT D'UN MODELE D'INTELLIGENCE ARTIFICIELLE A LA RESOLUTION D'UN TICKET D'INCIDENT, PROCEDE ET DISPOSITIF DE GENERATION D'UNE SUGGESTION DE RESOLUTION CORRESPONDANTS**

(71) Demandeur: ATOS France, 95870 Bezons (FR)
(72) Inventeur: CONAND, Clément, 31150 Bruguières (FR); COUMES, Coralie, 31700 Cornebarrieu (FR); GOUPIL, Louis, 31300 Toulouse (FR); KOHLER, Thibault, 31000 Toulouse (FR)
(74) Mandataire: Novagraaf Technologies

(57) **Abrégé**

Le procédé d'entraînement d'un modèle d'intelligence artificielle de type grand Modèle de Langage, LLM, pour la résolution d'un ticket d'incident émis par un utilisateur d'une ressource technique,
comprend les étapes suivantes, mises en œuvre par ordinateur, de :
- génération (31) d'une base de données d'entraînement structurées représentatives d'un ensemble de tickets d'incidents précédemment traités, les données d'entraînement structurées associées à undit ticket d'incident comprenant des réponses à des questions prédéterminées relatives à l'incident et à la résolution de l'incident, et
- réentraînement (32) du modèle LLM, à partir de ladite base de données d'entraînement structurées (BDS), à produire en sortie une suggestion en langage naturel de résolution de l'incident, en réponse à un ticket d'incident présenté en entrée.

## Description

### DOMAINE TECHNIQUE

La présente invention concerne la résolution de tickets d'incidents à l'aide d'un modèle d'intelligence artificielle. Elle concerne aussi l'entraînement du modèle d'intelligence artificielle.

### ARRIERE PLAN TECHNOLOGIQUE

Lorsqu'un utilisateur d'une ressource technique, telle que par exemple un système informatique, rencontre un problème, il peut saisir un ticket d'incident via une interface homme-machine. La saisie se fait généralement sous forme de texte, avec parfois des champs pré-remplis ou des menus déroulants pour structurer l'information fournie par l'utilisateur.

Plus précisément, un ticket d'incident est un enregistrement formel utilisé dans un système de gestion des incidents pour documenter, suivre et résoudre le problème ou dysfonctionnement survenu. Il permet de centraliser les informations et d'assurer une traçabilité du traitement de l'incident. Pour ce faire, il comprend généralement un identifiant du ticket, dont le numéro unique est attribué automatiquement pour référencer et suivre le ticket, une date et heure d'ouverture correspondant à l'instant où l'incident a été signalé, des informations, par exemple nom, fonction et coordonnées, sur l'utilisateur qui a signalé l'incident et une description textuelle de l'incident, indiquant par exemple les symptômes constatés, les messages d'erreur reçus, le contexte d'apparition du problème, etc. Il peut comprendre aussi des documents liés à l'incident et joints par l'utilisateur, tels que des captures d'écran, journaux, etc. En outre, il est généralement donné à l'utilisateur la possibilité d'attribuer un niveau de priorité ou de criticité à l'incident, en lien avec un niveau d'impact sur le service ou le fonctionnement du système et de classifier le type d'incident (ex : réseau, logiciel, matériel, accès, sécurité...). Ensuite, un identifiant de la personne d'une équipe d'intervention affectée au traitement de l'incident est indiqué dans le ticket. Le ticket peut aussi comprendre une liste des interventions réalisées pour diagnostiquer ou résoudre le problème, ainsi qu'un historique des messages échangés par l'équipe d'intervention avec l'utilisateur. Le ticket comprend parfois également un état du ticket indiquant son statut actuel, donc destiné à évoluer au cours du temps (ouvert, en cours, résolu, fermé, en attente...). Enfin, le ticket peut comprendre une description de la solution mise en œuvre pour résoudre le problème, ainsi qu'une date et heure de clôture.

Ainsi, un ticket d'incident prend généralement la forme d'un fichier texte comprenant des informations diverses. On comprend que la nature du problème, les conditions dans lesquelles il s'est produit, voire la description des étapes de la solution pour le résoudre peuvent être décrites de façon incomplète ou même ambigüe. Souvent, il en va de même pour son statut.

En outre, avec à la mondialisation des organisations et des services informatiques, un système de gestion d'incidents est amené à traiter des tickets ayant des origines géographiques plus variées et en quantité plus importante, donc plus hétérogènes en termes de format, langue et structure, combinés à des enjeux d'optimisation des ressources et de la qualité de service toujours plus élevés.

Dans ce contexte, il existe des solutions de résolution automatique des tickets, mettant en œuvre des modèles d'intelligence artificielle.

Néanmoins, elles présentent un ou plusieurs des inconvénients suivants :
- Limitations linguistiques : elles ne sont pas prévues pour gérer des contenus multilingues, conduisant à des analyses incomplètes ou biaisées.
- Dépendance à l'étiquetage : pour l'entraînement de leur modèle d'intelligence artificielle, elles nécessitent es données préalablement étiquetées, ce qui est coûteux et peu adaptable à des données réelles et dynamiques.
- Formats et structures rigides : elles ne sont pas prévues pour traiter efficacement des données aux formats variés, limitant leur flexibilité et leur couverture.
- Homogénéité des sources : elles s'appuient sur des sources uniformes ou limitées, ne permettant pas de tirer parti d'environnements de données hétérogènes.
- Interprétation simpliste des événements : elles ont du mal à comprendre des événements complexes ou interconnectés, réduisant la compréhension du contexte.
- Gestion de l'ambiguïté insuffisante : elles ne savent pas gérer efficacement des descriptions de problèmes ambiguës, ce qui entraîne des analyses erronées, et
- Problèmes de passage à l'échelle : elles ne sont pas capables de traiter efficacement de gros volumes de données,
- Besoins très importants en ressources informatiques, notamment en puissance de calcul.

La présente invention vise à améliorer la situation. Un objectif est notamment de proposer une solution de résolution automatique de tickets d'incidents, capable de gérer plus efficacement la diversité des informations qu'ils contiennent et de proposer une suggestion de résolution adaptée, tout en s'appuyant sur des ressources informatiques limitées.

### RESUME DE L'INVENTION

Selon un premier aspect, un procédé, mis en œuvre par ordinateur, d'entraînement d'un modèle d'intelligence artificielle de type grand Modèle de Langage, LLM, pour la résolution d'un ticket d'incident émis par un utilisateur d'une ressource technique, comprend les étapes suivantes :
- génération d'une base de données d'entraînement structurées représentatives d'un ensemble de tickets d'incidents précédemment traités, les données d'entraînement structurées associées à undit ticket d'incident comprenant des réponses à des questions prédéterminées relatives à l'incident et à la résolution de l'incident, et
- ledit modèle LLM ayant été préalablement entraîné à répondre à des requêtes en langage naturel, réentraînement du modèle LLM, à partir de ladite base de données d'entraînement structurées, à produire en sortie une suggestion de résolution de l'incident, en réponse à un ticket d'incident présenté en entrée, et
- mise à disposition du modèle LLM réentraîné pour utilisation.

L'invention répond au problème posé à l'aide d'une approche tout-à-fait nouvelle et inventive, qui exploite la puissance d'un grand modèle de langage pré-entraîné à répondre à des requêtes en langage naturel dans plusieurs langues. La solution proposée consiste à ré-entrainer de façon ciblée ce grand modèle de langage à prédire des suggestions de résolution d'incident à l'aide d'un corpus spécifique de données structurées généré à partir d'un historique de tickets d'incidents précédemment traités pour la ressource technique considérée.

Les données structurées générées à partir d'un ticket d'incident précédemment traité comprennent des réponses à quelques, typiquement deux ou trois, questions prédéterminées relatives à la nature de l'incident et à la résolution de l'incident. Les mêmes questions sont utilisées pour chacun des tickets d'incidents de l'ensemble de tickets, ce qui permet d'extraire une quantité limitée d'informations pertinentes du ticket et de les présenter selon une structure de données attendue par le modèle.

Du fait qu'elle est construite à partir de l'historique de tickets d'incidents précédemment traités par un système de gestion des tickets, la base de données d'entraînement peut être massive et représentative d'un très grand nombre de situations déjà rencontrées par le passé. Comme les données associées à chaque ticket dans la base structurée d'entraînement sont de type connu et de taille limitée, le réentrainement du modèle LLM mis en œuvre par l'invention est peu coûteux en ressources informatiques et peut s'exécuter dans un environnement contraint ou une infrastructure informatique conventionnelle.

L'invention s'applique à tout type de tickets d'incidents de n'importe quel type de ressource technique, par exemple un service, une infrastructure ou un matériel informatique, dans de nombreux domaines d'application. Il s'agit par exemple de la maintenance de serveurs informatiques ou de support pour l'accès à ou l'utilisation de ressources informatiques, comme par exemple l'utilisation d'applications logicielles, telles qu'un logiciel de gestion unifié d'une entreprise de type ERP (pour Enterprise Resource Planning).

Selon un ou plusieurs modes de réalisation, la génération de la base de données structurée comprend l'obtention des réponses par application des tickets d'incidents précédemment traités en entrée d'un premier modèle LLM avec les questions prédéterminées et l'enregistrement des réponses obtenues dans une structure de données.

La puissance d'un premier LLM pré entrainé à répondre à des requêtes en langage naturel est astucieusement exploitée pour générer automatiquement la base de données structurée destinée au réentraînement du LLM. Un avantage est de pouvoir traiter un gros ensemble de tickets d'entrée précédemment traités et d'éviter un étiquetage manuel.

Les modes de réalisation ci-dessus peuvent être combinés entre eux.

Selon un deuxième aspect, un procédé mis en œuvre par ordinateur, de génération d'une suggestion de résolution d'un ticket d'incident, émis par un utilisateur d'une ressource technique, comprend les étapes suivantes :
- Obtention du ticket d'incident saisi par l'utilisateur par l'intermédiaire d'une interface de communication homme-machine,
- Obtention) d'une suggestion de résolution du ticket par application d'informations contenues dans le ticket d'incident en entrée d'un modèle LLM préalablement ré-entraîné par le procédé selon le premier aspect, et
- Mise à disposition de la suggestion de résolution.

La suggestion de résolution peut être transmise directement à un utilisateur par l'intermédiaire de l'interface homme machine ou soumise préalablement à la validation d'un agent humain d'une équipe support. L'utilisateur peut être l'utilisateur final à l'origine du ticket d'incident ou un agent en charge de traiter le ticket d'incident, qui va pouvoir s'appuyer sur la suggestion de résolution pour répondre à l'utilisateur final.

Selon un ou plusieurs modes de réalisation, le procédé comprend une étape d'obtention d'informations textuelles à un contexte du ticket d'incident auprès d'une base de données documentaire (BDD) et en ce que lesdit éléments sont présentés en entrée du modèle avec le ticket d'entrée.

Elle s'appuie par exemple sur une technique de Génération augmentée par récupération ou RAG (en anglais, « Retrieval-Augmented Generation ») dont le principe repose sur l'association d'un modèle de langage de grande taille (LLM) avec un module de recherche d'informations, de sorte que le LLM génère une réponse en s'appuyant non seulement sur ses connaissances internes, mais également sur des documents pertinents extraits dynamiquement d'une base de données documentaire ou métier. Dans le cas d'une maintenance de matériel informatique, par exemple de type serveur, la base documentaire pourra inclure la documentation technique des différentes versions de serveurs.

Selon un ou plusieurs modes de réalisation, le procédé comprend en outre une étape d'obtention d'informations contenues dans le ticket d'incident par application du ticket d'incident en entrée d'un premier modèle LLM avec au moins une question prédéterminée relative à un problème posé dans le ticket d'incident.

Un avantage est de rendre le ticket plus compréhensible par le modèle LLM ré-entraîné à partir de réponses à des questions prédéterminées. Selon un exemple de mise en œuvre, le premier modèle LLM est celui utilisé pour générer la base de données d'entrainement structurées.

Les modes de réalisation ci-dessus peuvent être combinés entre eux.

Selon un troisième aspect, un dispositif d'entraînement d'un modèle d'intelligence artificielle de type Modèle de Langage Massif, LLM, pour la résolution d'un ticket d'incident émis par un utilisateur d'un service informatique, est configuré pour
- générer automatiquement une base de données d'entraînement structurées (BDS) représentatives de tickets d'incidents précédemment traités, les données d'entraînement structurées associées à undit ticket d'incident comprenant des réponses à des questions prédéterminées relatives à l'incident et à la résolution de l'incident, et
- ledit modèle LLM étant préalablement entraîné à répondre à des requêtes en langage naturel, réentraîner le modèle LLM, à partir dudit ensemble, à produire en sortie une suggestion de résolution de l'incident, en réponse à un ticket d'incident présenté en entrée, et
- mettre à disposition le modèle réentraîné pour utilisation.

Selon un ou plusieurs modes de réalisation, le dispositif comprend :
- au moins un processeur; et
- au moins une mémoire comprenant un code de programme informatique, au moins une mémoire et le code de programme informatique étant configurés pour, avec au moins un processeur, provoquer l'exécution dudit dispositif.

Selon un mode de réalisation, le dispositif comprend en outre une unité de traitement graphique, typiquement GPU, configurée pour exécuter, en coopération avec le dit au moins un processeur, des opérations de traitement de requête en langage naturel par le modèle LLM. Selon encore un autre mode de réalisation, il comprend en outre une deuxième mémoire, par exemple de type VRAM (Video Random Access Memory) dédiée à l'unité de traitement graphique GPU pour stocker temporairement toutes les données que l'unité GPU doit traiter rapidement.

Selon un ou plusieurs modes de réalisation, le dispositif précité est configuré pour mettre en œuvre tout ou partie des étapes du procédé selon le premier aspect dans ses différents modes de réalisation.

Selon un quatrième aspect, un dispositif de génération d'une suggestion de résolution d'un ticket d'incident, émis par un utilisateur d'un service informatique, est configuré pour :
- Obtenir le ticket d'incident par l'intermédiaire d'une interface de communication homme-machine,
- Présenter des informations contenues dans le ticket d'incident en entrée d'un modèle LLM préalablement ré-entraîné par le dispositif d'entrainement précité et obtenir une suggestion de résolution du ticket en sortie, et
- Mettre à disposition la suggestion de résolution.

Selon un ou plusieurs modes de réalisation, le dispositif de génération est configuré pour obtenir des éléments d'information textuelle associés à un contexte du ticket d'incident auprès d'une base de données documentaire et en ce que lesdits éléments sont présentés en entrée du modèle avec le ticket d'entrée.

Selon un ou plusieurs modes de réalisation, le dispositif de génération est en outre configuré pour : obtenir lesdites informations contenues dans le ticket d'incident par application du ticket d'incident en entrée d'un premier modèle LLM avec au moins une question prédéterminée relative à un problème posé dans le ticket d'incident.

Selon un ou plusieurs modes de réalisation, le dispositif de génération comprend:
- au moins un processeur ; et
- au moins une mémoire comprenant un code de programme informatique, la au moins une mémoire et le code de programme informatique étant configurés pour, avec l'au moins un processeur, provoquer l'exécution dudit dispositif.

Selon un mode de réalisation, le dispositif comprend en outre une unité de traitement graphique, typiquement GPU, configurée pour exécuter, en coopération avec le dit au moins un processeur, des opérations de traitement de requête en langage naturel par le modèle LLM ré-entraîné. Elle comprend généralement une pluralité de cœurs de traitement configurés pour effectuer en parallèle des opérations matricielles. Ce type de processeur est bien adapté et efficace pour entraîner et exécuter des modèles LLM.

Selon encore un autre mode de réalisation, le dispositif de génération comprend en outre une deuxième mémoire, par exemple de type VRAM (Video Random Access Memory) dédiée à l'unité de traitement graphique GPU pour stocker temporairement toutes les données que l'unité GPU doit traiter rapidement.

Selon un cinquième aspect, un système logiciel d'entraînement d'un modèle pour la résolution de tickets d'incidents, comprend :
- le dispositif d'entrainement selon le troisième aspect,
- une base de données d'entraînement structurée,

- -un modèle LLM destiné à être re-entraîné par le dispositif.

Selon un mode de réalisation, le système logiciel comprend en outre un ensemble de tickets d'incidents précédemment traités, et un premier modèle LLM destiné à produire la base de données d'entraînement structurée à partir de l'ensemble de tickets d'incidents précédemment traités.

Selon un sixième aspect, un système logiciel de génération d'une suggestion de résolution de tickets d'incidents, comprend :
-- Le dispositif de génération selon le quatrième aspect, et

- Le modèle LLM ré entrainé.

Selon un mode de réalisation, le système logiciel de génération d'une suggestion de résolution de tickets d'incidents, comprend en outre une base de données documentaires comprenant des éléments d'information textuelle relatives à la ressource informatique.

Selon un autre mode de réalisation, le système logiciel de génération d'une suggestion de résolution de tickets d'incidents comprend en outre le premier modèle LLM.

Selon un mode de réalisation, le système logiciel selon le quatrième ou le cinquième aspect est encapsulé dans un environnement d'exécution isolé, tel qu'un conteneur logiciel.

L'utilisation d'un conteneur logiciel permet d'isoler l'environnement d'exécution d'une application, tout en réduisant les ressources requises pour son déploiement, sa duplication ou sa migration. Pour s'exécuter, un conteneur a besoin au minimum d'un processeur, de mémoire vive (RAM) et d'un système d'exploitation hôte avec un moteur de conteneur (comme Docker par exemple).

Ce mécanisme favorise une exécution portable et reproductible, indépendante du système hôte.

Selon un septième aspect, un programme d'ordinateur comporte des instructions qui lorsqu'elles sont exécutées par un processeur mettant en œuvre le procédé selon le premier aspect ou selon le deuxième aspect dans un ou plusieurs de ses modes de réalisation.

Selon un huitième aspect, un support d'enregistrement non volatile et lisible par un ordinateur, stocke le programme d'ordinateur précité ou le système logiciel précité.

Le support d'informations peut être n'importe quel moyen matériel, entité ou appareil, capable de stocker les instructions d'un programme tel que mentionné ci-dessus. Les supports de stockage de programme utilisables incluent les mémoires ROM ou RAM, les supports de stockage magnétiques tels que des disques magnétiques et des bandes magnétiques, les disques durs ou des supports de stockage de données numériques à lecture optique, ou toute combinaison de ces supports.

Dans certains cas, le support de stockage lisible par ordinateur n'est pas transitoire. Dans d'autres cas, le support d'informations peut être un support transitoire (par exemple, une onde porteuse) pour la transmission d'un signal (signal électromagnétique, électrique, radio ou optique) porteur des instructions de programme. Ce signal peut être acheminé via un moyen de transmission approprié, filaire ou non filaire : câble électrique ou optique, liaison radio ou infrarouge, ou par d'autres moyens.

### BREVE DESCRIPTION DES FIGURES

Les exemples de réalisation seront mieux compris à la lumière de la description détaillée qui va suivre et des dessins qui l'accompagnent, lesquels sont donnés à titre d'illustration uniquement et ne sont donc pas limitatifs de la présente divulgation.
La figure 1 représente une vue schématique globale d'un système d'entrainement d'un grand modèle de langage à la résolution de tickets d'incidents, selon un mode de réalisation particulier.
La figure 2 représente une vue schématique globale d'un système de résolution de tickets d'incidents basé sur le grand modèle de langage, selon un mode de réalisation particulier.
La figure 3 représente un organigramme d'étapes d'un procédé d'entraînement d'un grand modèle de langage à la résolution de tickets d'incidents, selon un mode de réalisation particulier.
La figure 4 détaille la génération d'une base de données d'entraînement structurées à partir d'un ensemble de tickets d'incidents précédemment traités, selon un mode de réalisation particulier.
La figure 5 représente un organigramme d'étapes d'un procédé de résolution de tickets d'incidents à l'aide du grand modèle de langage entrainé, selon un mode de réalisation particulier.
La figure 6 présente schématiquement un exemple de système logiciel d'entrainement à la résolution de tickets d'incidents, lorsqu'il est stocké dans une mémoire d'un équipement électronique, selon un mode de réalisation particulier.
La figure 7 présente schématiquement un exemple de système logiciel de résolution de tickets d'incidents, lorsqu'il est stocké dans une mémoire d'un équipement électronique, selon un mode de réalisation particulier, et
La figure 8 présente schématiquement un exemple de structure matérielle d'un dispositif d'entrainement à la résolution de tickets d'incidents ou d'un dispositif de résolution de tickets d'incidents, selon un mode de réalisation particulier.

### DESCRIPTION DETAILLEE

Les détails structurels et fonctionnels spécifiques décrits ici constituent des exemples non limitatifs. Les exemples de réalisation décrits ici peuvent faire l'objet de diverses modifications et formes alternatives. L'objet de la divulgation peut être réalisé sous de nombreuses formes différentes et ne doit pas être interprété comme étant limité aux seules réalisations présentées ici à titre d'exemples illustratifs. Il convient de comprendre qu'il n'y a aucune intention de limiter les modes de réalisation aux formes particulières décrites dans la suite de ce document.

La présente divulgation concerne un système de gestion de tickets d'incidents, c'est-à-dire un système informatique configuré pour enregistrer, suivre et traiter des signalements d'événements ou de dysfonctionnements, généralement sous forme de tickets associés à des métadonnées (date, priorité, statut, etc.), afin d'assurer un suivi structuré d'interventions et de résolutions. Un tel système s'applique à toute ressource technique, telle qu'un système informatique (infrastructure, logiciel, matériel, réseau...), une application ou logiciel métier ou encore un système industriel (machine, automate, capteur) ainsi que tout autre composant technique ou technologique impliqué dans un fonctionnement opérationnel.

Selon le contexte applicatif considéré (informatique, industriel, service client, etc.), un tel système peut donc être amené à gérer une grande variété de types d'incidents survenus lors de l'utilisation de la ressource technique. Dans le domaine des systèmes informatiques par exemple, les incidents sont typiquement gérés dans un centre de support (en anglais, « helpdesk »). Les incidents peuvent concerner par exemple une panne de serveur ou de réseau, un problème d'accès à un logiciel ou un compte utilisateur, une défaillance d'un poste de travail ou d'un périphérique, la survenue d'une ou plusieurs erreurs applicatives (par exemple, le crash d'un logiciel métier), une perte ou corruption de données, une faille de sécurité ou tentative d'intrusion ou encore une indisponibilité d'un service distribué de type infrastructure en nuage (en anglais, « cloud »).

Un système de gestion des tickets d'incidents est généralement configuré pour créer un ticket (par un utilisateur ou automatiquement), attribuer le ticket à un agent ou une équipe, suivre l'état du ticket (nouveau, en cours, résolu, fermé...), prioriser le ticket, enregistrer un historique des actions et messages et enfin clore le ticket. En proportion variable selon le domaine d'application et la ressource technique considérée, l'historique des actions et messages échangés entre l'utilisateur et l'agent peut comprendre une description de la solution mise en œuvre pour résoudre le problème, ainsi qu'une date et heure de clôture.

Dans la suite, des dispositifs, méthodes et systèmes de résolution automatique de tickets d'incidents à l'aide d'un grand modèle de langage sont proposés, ainsi que des dispositifs, méthodes et systèmes d'entraînement du grand modèle de langage à la résolution automatique de tickets d'incidents, selon des modes de réalisation.

Un grand modèle de langage ou LLM (de l'anglais, « Large Language Model ») est un système d'intelligence artificielle entraîné sur un vaste corpus de données textuelles, (livres, articles, pages web, etc.) afin d'acquérir une compréhension générale du langage naturel. Un tel modèle s'appuie généralement sur des architectures de réseaux de neurones profonds, notamment de type « transformer », et comprend plusieurs milliards de paramètres. Typiquement, les LLMs peuvent être utilisés, entre autres, pour générer automatiquement du texte cohérent, résumer ou traduire des documents, répondre à des questions en langage, etc. Une fois entraîné de façon classique, le LLM peut être réentraîné dans une phase d'adaptation ou d'ajustement spécifique (en anglais, « fine-tuning ») à une tâche particulière ou à un domaine ciblé. Pour ce faire, on constitue un jeu de données représentatif de la tâche visée).et on réentraîne le modèle, de manière supervisée, sur ce jeu de données, avec un taux d'apprentissage réduit. Cela permet d'ajuster les paramètres du modèle pour optimiser ses performances sur la tâche spécifique, tout en conservant les connaissances générales acquises lors du pré-entraînement. Une fois le réentraînement effectué, on obtient un modèle spécialisé, capable d'exécuter la tâche avec une précision supérieure à celle du modèle générique, en réutilisant la puissance d'un modèle généraliste et sans avoir à réentraîner un modèle depuis zéro, ce qui permet d'économiser des ressources et du temps.

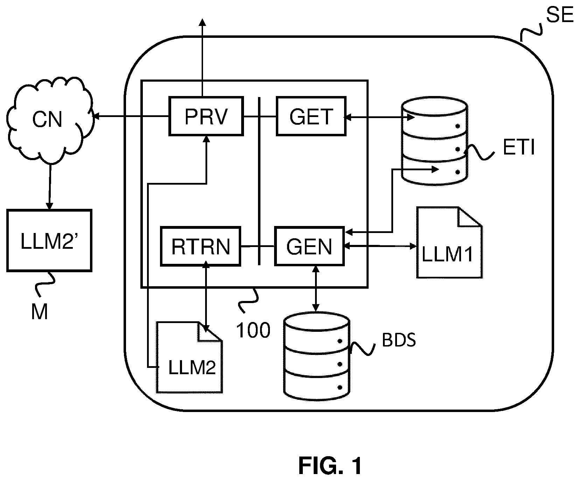

La figure 1 représente de façon schématique un exemple d'architecture fonctionnelle d'un système d'entraînement SE d'un grand modèle de langage LLM2 à la résolution de tickets d'incidents, selon un mode de réalisation. Il comprend le grand modèle de langage LLM2 et un dispositif 100 d'entraînement du modèle LLM2 à la résolution d'un ticket d'incident émis par un utilisateur d'une ressource technique. Le dispositif 100 comprend un module GET configuré pour obtenir un ensemble ETI de tickets d'incidents précédemment traités, par exemple d'une mémoire locale ou distante, un module GEN configuré pour générer automatiquement une base de données BDS d'entraînement structurées représentatives des tickets d'incidents précédemment traités, un module RTRN pour ré-entraîner le modèle LLM, à partir des données de la base BDS, à produire en sortie une suggestion de résolution de l'incident, en réponse à un ticket d'incident présenté en entrée. Il comprend enfin un module de mise à disposition du modèle LLM réentraîné LLM2' pour utilisation en mode production (ou inférence). Par exemple, il est stocké dans une mémoire M locale ou distante, par exemple accessible via un réseau de communication CN.

Dans la base de données d'entraînement structurées BDS, les données d'entraînement structurées associées à un ticket d'incident comprennent des réponses à des questions prédéterminées relatives à l'incident et à la résolution de l'incident.

Selon un mode de réalisation particulier, le module GEN de génération de la base de données d'entraînement structurées BDS est configuré pour obtenir des réponses aux questions prédéterminées à l'aide d'un premier grand modèle de langage LLM1. Les tickets d'incidents précédemment traités de l'ensemble ETI sont présentés, avec les questions prédéterminées, en entrée du premier grand modèle de langage LLM1 qui produit en sortie des réponses aux questions. Les réponses obtenues sont enregistrées dans la base BDS dans des structures de données respectivement associées aux tickets d'incidents de l'ensemble EIT.

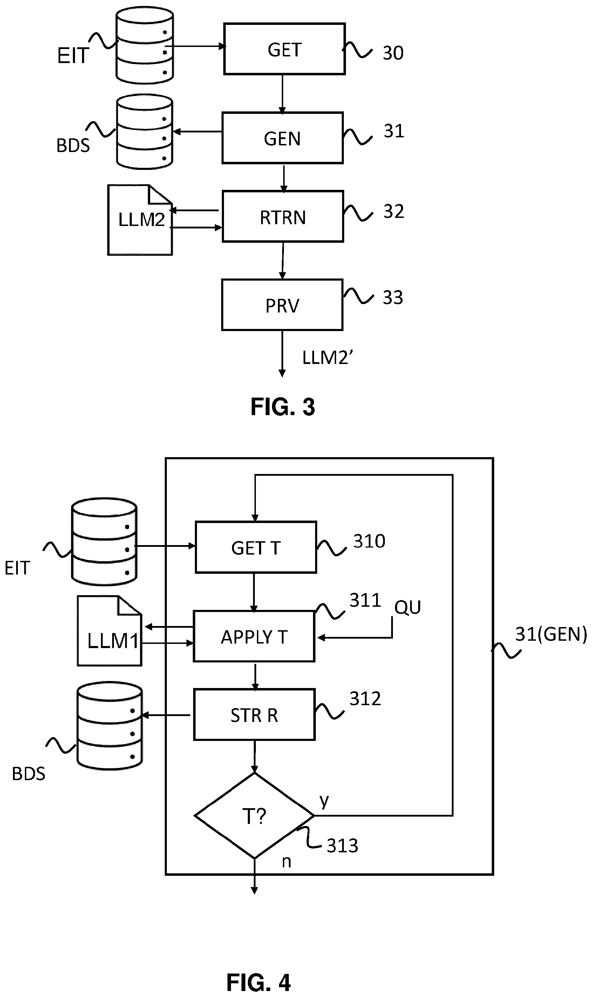

Selon un ou plusieurs exemples de réalisation, le dispositif 100 met en œuvre un procédé d'entraînement d'un grand modèle de langage à la résolution de tickets d'incidents, qui va être décrit ci-après en relation avec la figure 3.

Selon un ou plusieurs modes de réalisation, le dispositif 100 est implémenté par des moyens matériels (en anglais, « hardware ») et/ou des moyens logiciels (en anglais, « software »). Les moyens matériels peuvent comprendre un ou plusieurs processeurs. Selon un exemple de réalisation, un processeur de type GPU (en anglais, « Graphics Processing Unit ») de moyenne gamme, typiquement intégré dans dispositifs électroniques grand public pour des applications multimédia ou de jeux vidéo, est utilisé. Il présente l'avantage d'être peu onéreux, économe en énergie et peu exigeant en termes d'architecture matérielle.

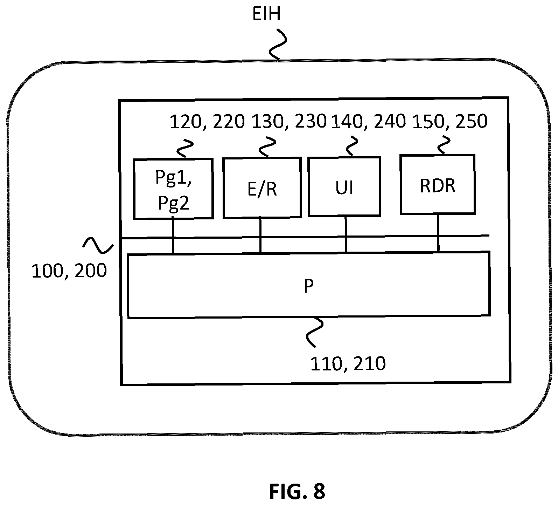

Les moyens logiciels peuvent comprendre des applications, logiciels, programmes d'ordinateur, et/ou un ensemble d'instructions de programme et de données. Les moyens mis en œuvre pour l'implémentation du dispositif 100 peuvent être intégrés dans un même équipement informatique, comme décrit ci-après en relation avec la figure 8, par exemple un équipement électronique ou bien être distribués sur plusieurs équipements selon une architecture en nuage.

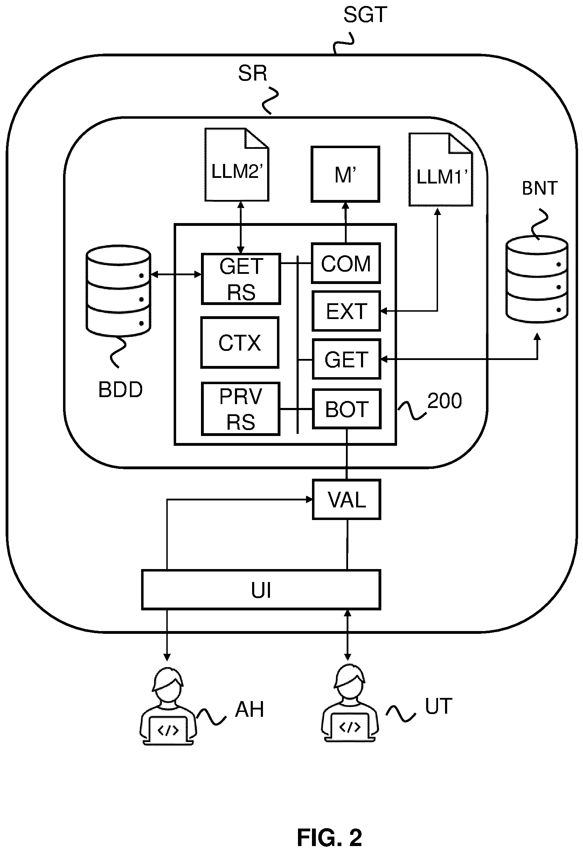

La figure 2 représente de façon schématique un exemple d'architecture fonctionnelle d'un système SR de résolution d'un ticket d'incident émis par un utilisateur UT d'une ressource technique, selon un mode de réalisation. Il comprend un grand modèle de langage LLM2', par exemple mis à disposition par le dispositif 100 de la figure 1 et un dispositif 200 résolution d'un ticket d'incident. Le système SR est connecté à une interface homme-machine UI par l'intermédiaire de laquelle l'utilisateur UT saisit un nouveau ticket d'incident ainsi qu'à une base de données BNT stockant les nouveaux tickets.

Dans l'exemple de la figure 2; le dispositif 200 comprend un module GET d'obtention d'un ticket d'entrée, configuré pour obtenir le ticket d'incident de l'utilisateur UT qu'il a saisi par l'intermédiaire de l'interface de communication homme-machine UI, un module GET RS d'obtention d'une suggestion de résolution du ticket d'incident produite en sortie du grand modèle de langage LLM2' en réponse à des informations contenues dans le ticket d'incident présenté en entrée et un module PRV RS de mise à disposition de la suggestion de résolution à l'utilisateur UT par l'intermédiaire de l'interface de communication homme-machine UI.

Selon un ou plusieurs modes de réalisation, le dispositif 200 comprend un module BOT de dialogue automatique (chatbot) configuré pour interpréter une entrée utilisateur reçue via l'interface homme-machine UI du système SR, enregistrer un ticket d'incident dans le système de résolution SR, pour le ticket d'incident au grand modèle de langage LLM2', et afficher en retour la suggestion de résolution d'incident qu'il a produite.

Selon l'exemple de la figure 2, le système SR comprend une base de données documentaires ou métier BDD comprenant des documents techniques de description de la ressource technique et de son fonctionnement. Le dispositif 200 comprend en outre un module CTX configuré pour obtenir des éléments d'information textuelle associés à un contexte du ticket d'incident auprès de la base de données documentaire BDD et les moyens GET RS d'obtention d'une suggestion de résolution sont configurés pour présenter lesdits éléments en entrée du grand modèle de langage LLM2', avec le ticket d'entrée.

Selon un ou plusieurs modes de réalisation, le dispositif 200 comprend un module EXT d'obtention des informations contenues dans le ticket d'incident préalablement à leur présentation au modèle LLM2'. Il peut comprendre aussi un premier modèle LLM1', par exemple le premier modèle LLM1, que le module EXT est configuré pour interroger en vue d'obtenir lesdites informations. Par exemple, il lui présente le ticket d'incident en entrée accompagné d'une invite ou requête comprenant une question prédéterminée du type « *Voici un ticket d'incident. Quel est le problème posé ».*

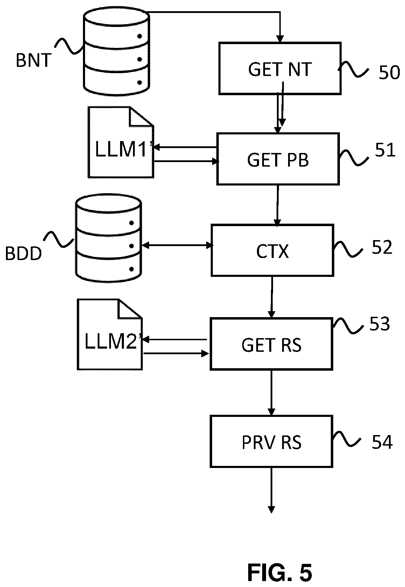

Selon un ou plusieurs exemples de réalisation, le dispositif 200 met en œuvre un procédé de résolution d'un ticket d'incident, qui va être décrit ci-après en relation avec la FIG. 5.

Selon un ou plusieurs modes de réalisation, le dispositif 200 est implémenté par des moyens matériels et/ou logiciels. Les moyens matériels peuvent comprendre un ou plusieurs processeurs. Ils peuvent aussi comprendre une unité de traitement graphique ou GPU (de l'anglais, en anglais, « Graphics Processing Unit ») qui est bien adaptée au traitement de requête en langage naturel par un grand modèle de langage. Les moyens logiciels peuvent comprendre des applications, logiciels, programmes d'ordinateur, et/ou un ensemble d'instructions de programme et de données. Les moyens mis en œuvre pour l'implémentation du dispositif 200 peuvent être intégrés dans un même équipement informatique, comme décrit ci-après en relation avec la FIG. 8, par exemple un équipement électronique ou bien être distribués sur plusieurs équipements selon une architecture en nuage. Dans l'exemple de la figure 2, l'interface homme machine UI est intégrée au dispositif 200. En alternative, elle est externe au dispositif 200, mais connectée à ce dernier par un module de communication COM. La suggestion de résolution RS peut aussi être stockée en mémoire locale M', par exemple intégrée au système SR comme illustré par la figure 2, ou distante.

Comme illustré sur la figure 2, le système de résolution SR peut être intégré (ou s'interfacer) à un système de gestion de tickets d'incidents SGT comprenant notamment des modules (non représentés) de création et d'enregistrement des tickets, d'assignation automatisée à des agents, de communication et de suivi d'état, de génération de rapports et d'analyses, une base de connaissances, etc. Dans ce cas le système de gestion de tickets peut aussi inclure l'interface homme-machine UI et la base de nouveaux tickets BNT. Selon un mode de réalisation, un nouveau ticket d'incident reçu est traité par le système SR, puis, s'il n'est pas résolu automatiquement par le système SR, il est réaffecté à un agent humain par le système SGT. Selon un autre mode de réalisation, la suggestion de résolution produite par le système de résolution SR est soumise à validation d'un agent humain AH.

En relation avec la figure 3, on va maintenant décrire un procédé d'entraînement d'un grand modèle de langage LLM2, selon un ou plusieurs modes de réalisation. Dans cet exemple, on suppose qu'il est mis en œuvre par le dispositif 100 de la figure 1. Un tel modèle a été préalablement entraîné à répondre à des requêtes en langage naturel.

Selon un ou plusieurs modes de réalisation, il s'agit d'un modèle de LLM léger (en anglais, « lightweight LLM ») c'est-à-dire présentant une architecture ou une taille réduite, optimisé pour être plus rapide, moins coûteux et plus facile à déployer, notamment dans des environnements contraints (appareils mobiles, serveurs locaux, applications embarquées, etc.), tel que par exemple le modèle Mistral 7B de la société Mistral^{®}, comprenant 7 milliards de paramètres ce qui est peu comparé à un modèle « Transformer » de type modèle génératif pré-entrainé GPT (de l'anglais, « Generative Pretrained Transformer ») qui comprend environ 400 milliards de paramètres. Bien sûr, d'autres modèles légers, tels que TinyLLaMA, Phi-2 ou LLaMA 2 7B pourraient aussi être utilisés.

Lors d'une étape 30, un ensemble EIT de tickets précédemment traités par le système de gestion de tickets d'incidents relatifs à une ressource technique donnée, est obtenu. Dans la suite, on considère à titre d'exemple illustratif et non limitatif que la ressource technique comprend des matériels informatiques, de type serveurs et que les tickets d'incidents précédemment traités ont été collectés auprès d'une pluralité d'entreprises, implantées dans différents pays, qui utilisent ces serveurs dans leurs infrastructures informatiques. L'ensemble EIT comprend un grand nombre de tickets, par exemple environ 13000, comprenant des données non structurées, hétérogènes (échanges textuels par email entre l'utilisateur UT et l'équipe support, captures d'écran, etc), les éléments textuels pouvant être formulés dans différentes langues.

Au cours d'une étape 31, une base de données d'entraînement structurées BDS représentatives de l'ensemble EIT de tickets d'incidents précédemment traités est générée automatiquement. On suppose qu'un ticket d'incident est reçu sous la forme d'un fichier texte, par exemple au format .txt, comprenant l'ensemble des informations du ticket.

Les données d'entraînement structurées associées à undit ticket d'incident comprennent des réponses à des questions prédéterminées relatives à l'incident et à la résolution de l'incident.

Selon un ou plusieurs modes de réalisation, il s'agit au moins des deux questions suivantes :
- *Quel est le problème signalé ?*

*--Quelles sont les étapes décrites pour résoudre le problème ?*

Ces questions, simples et basiques, visent à définir le problème posé et la solution apportée. Elles sont ici formulées en français. On note qu'elles pourraient aussi bien être exprimées dans une autre des nombreuses langues pour lesquelles le grand modèle de langage a été suffisamment entrainé pour permettre un traitement linguistique fiable, comme par exemple l'anglais.

Selon un autre mode de réalisation, une troisième question est posée :
*Est-ce que le ticket inclut une résolution explicite du problème ? Uniquement répondre par oui ou non*

L'information relative au fait qu'un ticket comprenne ou non une solution au problème posé, est pertinente, puisqu'elle indique s'il comporte sa propre étiquette (en anglais, « label »), exploitable dans le cadre d'un apprentissage supervisé d'un modèle d'IA. Selon un mode de réalisation, les réponses à cette troisième question sont utilisées pour filtrer les tickets de la base de données d'entraînement structurées BDS et ne garder que ceux qui incluent une solution au problème posé, les autres étant considérés comme non étiquetables ou « labélisables ».

Les réponses obtenues pour un ticket d'incident sont stockées dans une structure de données adaptée. Un exemple de mise en œuvre de cette étape 31 sera détaillé ci-après, en relation avec la figure 4.

Lors d'une étape 32, le grand modèle LLM2 est soumis à un réentrainement spécifique, autrement dit ciblé sur la tâche de résolution d'un ticket d'incident, à partir des tickets de la base de données structurées BDS. Selon un mode de réalisation, seuls les tickets d'incident qui incluent une solution au problème posé sont utilisés. Ainsi, selon un exemple de mise en œuvre, tous les tickets d'incident de l'ensemble EIT sont soumis au grand modèle LLM1 et seuls ceux qui incluent une résolution explicite du problème sont conservés dans la base de données structurées BDS en vue d'être présentés au grand modèle LLM2.

Cette phase d'ajustement de l'apprentissage du modèle LLM2 est destiné à lui apprendre à répondre de façon plus performante à une requête de résolution d'un ticket d'incident présenté en entrée en produisant une suggestion de résolution du problème signalé. Selon un mode de réalisation, un algorithme d'ajustement efficace en paramètres PEFT (en anglais, « *Parameter-Efficient Fine-Tuning »)* est utilisé, lequel consiste à ajuster uniquement un sous-ensemble restreint de paramètres, typiquement ajoutés au grand modèle pré-entraîné, sans modifier l'ensemble des poids d'origine de ce modèle. Ce type d'ajustement peut notamment être mis en œuvre à l'aide d'une adaptation de faible rang, telle que la méthode LoRA (de l'anglais, *« Low-Rank Adaptation* »). Généralement, le réentrainement prend fin lorsqu'une fonction de perte (en anglais, « loss function ») visant à mesurer l'erreur commise par le modèle en comparant les sorties prédictives aux sorties attendues, a atteint une valeur minimale et stagne. Du fait qu'elle s'appuie sur l'apprentissage massif dont a déjà fait l'objet le modèle, cette phase d'ajustement peut être mise en œuvre avec des ressources informatiques raisonnables en un temps limité. Par exemple, le ré-entraînement peut prendre environ une heure pour un ensemble de 13000 tickets sur une infrastructure comprenant un processeur CPU Intel(R) Core(TM) i7-5820K CPU, une fréquence de 3.30GHz et 40Go de mémoire RAM, telle que par exemple une station de travail fixe ou un ordinateur portable de type Alienware Area-51^{®} release 2, configuré pour exécuter des applications à forte intensité de calcul, telles que les jeux vidéo ou les environnements de réalité virtuelle.

En 33, la version réentraînée du modèle LLM2' obtenue à l'issue de l'étape précédente est mise à disposition pour utilisation.

On détaille maintenant, en relation avec la figure 4, l'étape 31 de génération automatique de la base de données structurées BDS selon un ou plusieurs modes de réalisation. Elle s'appuie sur un autre grand modèle de langage LLM1, comme illustré par la figure 1. Selon un ou plusieurs modes de réalisation, il s'agit aussi d'un modèle de LLM léger, par exemple, le modèle Mistral 7B de la société Mistral^{®}, comprenant 7 milliards de paramètres. Ce modèle LLM1 est utilisé pour générer, pour chaque ticket de l'ensemble EIT, des réponses aux questions prédéterminées relatives à l'incident et à la résolution de l'incident.

La séquence de sous-étapes suivantes est donc mise en œuvre pour chacun des tickets T de l'ensemble EIT :
Lors d'une sous-étape 310, un ticket T est obtenu de l'ensemble EIT. En 311, il est présenté en entrée du modèle LLM1 avec des questions prédéterminées relatives au problème signalé dans le ticket T et sa résolution, par exemple les deux ou trois questions énoncées ci-avant. Selon un ou plusieurs modes de réalisation, ces questions sont insérées dans une invitation ou requête en langage naturel (en anglais, « prompt ») indiquant au modèle qu'il doit analyser le ticket et exploiter son contenu pour fournir en sortie une réponse en langage naturel aux questions posées.

En 312, les réponses R obtenues pour le ticket T sont enregistrées dans une structure de données par exemple tabulaire, par exemple dans un fichier de données conforme au format CSV (pour « Comma-Separated Values », en anglais) dont chaque ligne du fichier représente une ligne de données, et les valeurs (ou champs) sont séparées par un caractère délimiteur, de type virgule ou point-virgule. Ce format est largement utilisé pour échanger des données structurées entre applications, notamment entre bases de données. Selon un mode de réalisation, un seul fichier de données regroupe les réponses obtenues pour l'ensemble des tickets, une ligne étant associée à chaque ticket. Selon un mode réalisation, il regroupe tous les éléments de la base de données structurée BDS. Selon un exemple de mise en œuvre, il stocke, pour chaque ticket, les réponses aux questions associées à l'identifiant ou nom du ticket. Le contenu entier des tickets n'est pas dupliqué pour éviter d'avoir un fichier trop volumineux.

En 313, un test est effectué pour vérifier s'il reste des tickets à traiter dans l'ensemble EIT. Si c'est le cas, les étapes 310 à 313 sont itérées, sinon le traitement s'arrête.

Selon un mode de réalisation, l'étape de génération 31 de la base de données structurées BDS est implémentée de façon logicielle, par exemple sous forme de script en langage python, ce langage étant très adapté au traitement de données à la manipulation de fichiers de données de type tableur comme CSV.

Elle permet de construire automatiquement une base de données d'entraînement qui est à la fois structurée selon un modèle défini et tabulaire d'organisation des données, avec des types de données définis pour chaque champ (notamment les réponses aux questions prédéterminées) et labellisée (par la réponse à la question « Quelles sont les étapes décrites pour résoudre le problème ».

Le procédé d'entraînement d'un grand modèle de langage à la résolution de tickets d'incidents, qui vient d'être décrit en relation avec les figures 3 et 4, produit une nouvelle version LLM2' du grand modèle de langage, spécifiquement réajustée pour la résolution de ticket d'incidents relatifs à l'utilisation d'une ressource technique donnée.

En relation avec la figure 5, on décrit maintenant l'utilisation de cette nouvelle version LLM2' du grand modèle de langage dans un procédé de résolution de ticket d'incidents en relation avec l'utilisation de cette ressource technique donnée selon un ou plusieurs modes de réalisation. On suppose ici qu'il est mis en œuvre par le dispositif 200 de la figure 1.

Lors d'une étape 50, un nouveau ticket d'incident NT émis par un utilisateur d'une ressource technique est obtenu, par exemple via une interface homme machine UI ou auprès d'une base de nouveaux tickets d'incidents BNT dans laquelle il a été préalablement enregistré. En 53, une suggestion de résolution d'incident est obtenue par interrogation du grand modèle de langage réentraîné LLM2'. Pour ce faire, des informations contenues dans ou obtenues à partir d'un nouveau ticket NT lui sont présentées en entrée, accompagnées d'une invitation ou requête pour obtenir en sortie une suggestion de résolution au problème posé dans le nouveau ticket NT.

Selon un mode de réalisation, elles sont obtenues en 51 par un premier modèle LLM1', par exemple le premier modèle LLM1, à l'aide d'une question prédéterminée du type « *Quel est le problème posé dans le ticket d'incident ?* ».

Selon un autre mode de réalisation, elles ont été obtenues lors de la saisie du ticket d'incident NT par l'utilisateur, par l'intermédiaire d'une interface homme machine de type assistant intelligent (en anglais, « chatbot »), configuré pour dialoguer en langage naturel avec l'utilisateur.

. Par exemple, la requête est très simple et prend la forme suivante : « *Voici un résumé d'un ticket d'incident, quelle est la solution technique au problème posé ?* ». En réponse, le modèle LLM2 ' produit la suggestion de résolution RS demandée en sortie.

En 54, la réponse RS du modèle est ensuite mise à disposition d'un utilisateur. Selon un mode de réalisation, il s'agit d'un utilisateur intermédiaire ou agent humain AH, en charge de traiter le nouveau ticket NT. Il va s'appuyer sur la suggestion de résolution produite par le grand modèle LLM2 pour proposer sa propre solution à l'utilisateur final à l'origine du nouveau ticket NT. Il peut donc apporter des modifications et corrections à cette suggestion de résolution. Selon un autre mode de réalisation, elle est directement transmise à l'utilisateur final.

Selon un premier mode de réalisation la réponse RS du modèle est transmise à l'utilisateur, intermédiaire ou final, par l'intermédiaire de l'interface de communication homme-machine UI, par exemple affichée sur un écran. Selon un autre mode de réalisation elle est stockée en mémoire locale ou distante ou bien elle est transmise à un équipement terminal de l'utilisateur par l'intermédiaire du réseau de communication CN.

Selon un ou plusieurs modes de réalisation, le procédé comprend en outre une étape 52 d'obtention d'informations textuelles relatives à un contexte du ticket d'incident auprès d'une base de données documentaire BDD comprenant de la documentation métier décrivant la ressource technique et les éléments d'informations textuelles obtenues sont ajoutés au nouveau ticket NT et à l'invitation à produire une suggestion de résolution, en entrée du modèle LLM2'. Autrement dit, une architecture hybride selon une technique de Génération de texte assistée par récupération d'informations ou RAG (de l'anglais, « Retrieval-Augmented Generation ») est mise en œuvre, combinant deux étapes :
- Recherche d'information pertinente par interrogation d'une base de connaissances externe, comprenant de l'information métier spécifique à la ressource technique, par exemple une documentation technique.
- Génération augmentée par injection des éléments d'information récupérés dans la requête ou invitation présentée au modèle LLM2', lequel génère une réponse en s'appuyant à la fois sur ses connaissances internes et sur les éléments d'information récupérés.

Par exemple, une recherche par similarité sémantique est utilisée pour extraire les éléments d'information les plus pertinentes par rapport au problème posé dans le nouveau ticket NT. Selon un ou plusieurs modes de réalisation, chaque élément d'information de la base documentaire est associé à une représentation vectorielle obtenue par encodage sémantique. Le nouveau ticket NT est lui-aussi associé à une représentation vectorielle de ce type. La représentation vectorielle du ticket NT est comparée à celles des éléments d'information de la base documentaire, de sorte à évaluer une proximité contextuelle de la requête utilisateur exprimée en langage naturel dans le ticket d'incident.

Pour effectuer la recherche par proximité sémantique, le ticket d'incident et la requête utilisateur associée (ou prompt) sont aussi vectorisés. Le module de recherche d'information extrait les documents les plus proches dans l'espace vectoriel de la base documentaire. Une fois ces documents retrouvés, ils sont reconvertis sous leur forme textuelle originale. Le texte obtenu est ensuite injecté dans le prompt du LLM, en tant que contexte lisible, pour qu'il génère une réponse pertinente.

Un avantage de cette architecture est de limiter les risques d'hallucination par le grand modèle de langage et de lui mettre à disposition des informations spécifiques et à jour sur la ressource technique, qu'il ne connait pas et auxquelles il n'aurait pas accès sinon. Cette étape supplémentaire permet donc d'augmenter les performances du grand modèle de langage pour suggérer une résolution du problème plus pertinente et plus précise.

Il convient de noter que le grand modèle de langage LLM2 peut être réentraîné régulièrement de façon ciblée à partir d'un historique de tickets d'incidents précédemment traités plus récemment reçus par le système de gestion de tickets SGT. Il convient de noter que n'importe quel ticket récemment traité peut être utilisé, qu'il ait été traité manuellement ou automatiquement par le LLM2. Néanmoins, il est préalablement étiqueté automatiquement par le premier modèle LLM1.

On présente maintenant des exemples illustratifs de tickets d'incident traités par le dispositif 200 et le procédé de résolution qui viennent d'être décrits.

Selon un premier exemple, on considère les informations suivantes obtenues à partir d'un ticket d'incident :
*« Le serveur XAN-GE1-00040 ne démarre pas correctement et l'équipe de support informatique ne peut pas* se *connecter à lui à distance. Un expert s'est déplacé sur site pour mener des investigations et il a détecté que le serveur redémarrait bien mais qu'il n'indiquait que le logo du fabricant sur l'écran ».*

Comme décrit ci-avant, elles ont par exemple été préalablement et automatiquement extraites du ticket d'incident par le premier modèle LLM1 à l'aide d'une question prédéterminée du type *« Quel est le problème posé dans le ticket d'incident ?* » ou bien obtenues par l'intermédiaire d'une interface homme machine de type assistant intelligent (en anglais, « chatbot »), configuré pour dialoguer avec un utilisateur qui souhaite soumettre un ticket d'incident.

Les informations ci-dessus sont accompagnées d'une requête ou invite sous la forme d'une question adressée au modèle LLM2, du type : « Voici un résumé d'un ticket d'incident. Quelle est la solution technique au problème posé ». A cette question, le dispositif de résolution 200 et le procédé qui viennent d'être décrits pourront répondre avec la ou les suggestions de résolution suivantes :
*« Connectez-vous directement au serveur avec un câble BMC (de l'anglais « Baseboard Management Controller », un composant matériel intégré aux serveurs permettant la gestion à distance de la machine, indépendamment de l'état du système d'exploitation),*

*Effectuez un reflash du BIOS via l'interface Web (WEB GUI), si le problème persiste, procédez à une réinitialisation du CMOS, et en dernier recours, tentez une procédure de récupération du BIOS ».*

Selon un deuxième exemple, on considère les informations suivantes obtenues du premier grand modèle LLM1 (en réponse aux trois questions précédentes) à partir d'un ticket d'incident relatif à un message électronique non distribué.

« *1. Le ticket contient-il une solution explicite ?* »

Réponse : « Oui » (par exemple converti en 1 dans le fichier csv de stockage des réponses)

« *2. Quel est le problème posé dans ce ticket ?* » Réponse : « Le message électronique a rencontré une erreur lors de la tentative d'envoi au destinataire client@mail.com. Le message d'erreur indique que l'hôte 'servername' est introuvable, ce qui a entraîné une erreur fatale permanente. Le courriel a été reçu de l'expéditeur 'client' avec l'adresse IP 'XX.XX.XX.XX'. »

« *3. Quelle est la solution apportée au problème posé?* » Réponse :
« 1. Vérifiez les enregistrements DNS pour le domaine « server.wxyz ». Assurez-vous que l'adresse IP associée à ce domaine est accessible et correctement configurée.
2. Vérifiez que l'adresse e-mail « client@mail.com> » est correctement formatée et existe au sein de l'organisation.
3. Si l'adresse e-mail est valide, vérifiez les enregistrements MX du domaine « server.wxyz » afin de vous assurer que le serveur de messagerie chargé de traiter les e-mails destinés à ce domaine est correctement configuré et accessible.
4. Si le problème persiste, contactez le service informatique ou l'administrateur de messagerie de l'organisation « mail.com » pour signaler le problème et demander de l'aide afin de résoudre le problème de configuration DNS ou de messagerie.
5. Si l'adresse e-mail n'est pas valide, informez l'expéditeur de l'e-mail que l'adresse est incorrecte et fournissez-lui. »

Les réponses obtenues pour ce ticket sont insérées dans une ligne du fichier CSV constituant la base de données d'entrainement structurées.

Selon un troisième exemple, on présente à titre illustratif une invite ou prompt présentée en entrée du deuxième grand modèle, en association avec un nouveau ticket d'incident NT, relatif à une erreur signalée dans un journal d'événements collecté et accessible via une interface IPMI (« Intelligent Platform Management Interface , en anglais), un protocole utilisé pour la gestion à distance des serveurs. L'erreur concerne une barrette de mémoire vive de type DIMM (pour » Dual Inline Memory Module », en anglais) considérée comme défectueuse. On suppose que ce nouveau ticket a préalablement été appliqué au premier grand modèle LLM1' pour obtenir une réponse à la deuxième question: « 2. *Quel est le problème posé dans ce ticket ?* ». Il convient de noter que bien que le premier grand modèle LLM1 soit configuré pour produire des réponses aux trois questions précédentes, seule la réponse à la deuxième question sera utilisée ici pour interroger le deuxième grand modèle LLM2.

Par exemple, l'invite ou prompt suivante est présentée en entrée du deuxième grand modèle LLM2, avec le nouveau ticket d'incident NT, désigné ci-après comme une « entrée » :
*« Voici des instructions décrivant une requête à traiter, accompagnées d'une entrée fournissant des informations supplémentaires. Ecris une réponse appropriée à la requête.*

### ### Instructions:

*Voici un résumé d'un ticket d'incident, quelle est la solution technique à cet incident ?*
### Entrée:
Le problème est qu'il y a une erreur dans le journal IPMI du nœud nXXX, plus précisément deux événements de type mémoire avec la même assertion #0x00 (Mémoire) | Événement = ECC corrigible@DIMMD1(CPU2). Ceci indique qu'il y a un problème avec un DIMM localisé à l'adresse DIMMD1(CPU2) et qu'il doit être remplacé. Le ticket a été créé et assigné à AAAAA pour résolution. AAAAA a remplacé le DIMM et validé qu'il n'y avait plus d'erreur. Il a ensuite fermé le ticket."

Ce paragraphe correspond à la réponse à la deuxième question fournie par le premier grand modèle LLM1'.

En sortie, le LLM2 produit une suggestion de résolution RS qui apporte une solution ou explique (comme c'est le cas ci-après) qu'il ne dispose pas de suffisamment d'information pour le résoudre :
*« Le ticket indique qu'il y a eu deux erreurs de mémoire sur le nœud nXXX et que la barrette DIMM située à DIMMD1(CPU2) (32 Go) a été remplacée. Cependant, le ticket ne précise pas clairement les étapes spécifiques qui ont été suivies pour identifier la barrette DIMM défectueuse et la remplacer.*
*« Pour bien comprendre la solution au problème, il serait utile d'avoir plus d'informations sur les mesures prises pour diagnostiquer et résoudre le problème. Par exemple, a-t-on identifié des outils ou procedures spécifiques utilisés pour identifier le DIMM défectueux ? Comment s'est déroulé le processus de remplacement ? Avez-vous rencontré des difficultés pendant le processus de remplacement et comment les avez-vous résolues ? Sans cette information supplémentaire, il est difficile de déterminer déterminer l'étendue complète de la solution au problème décrit dans le ticket. »*

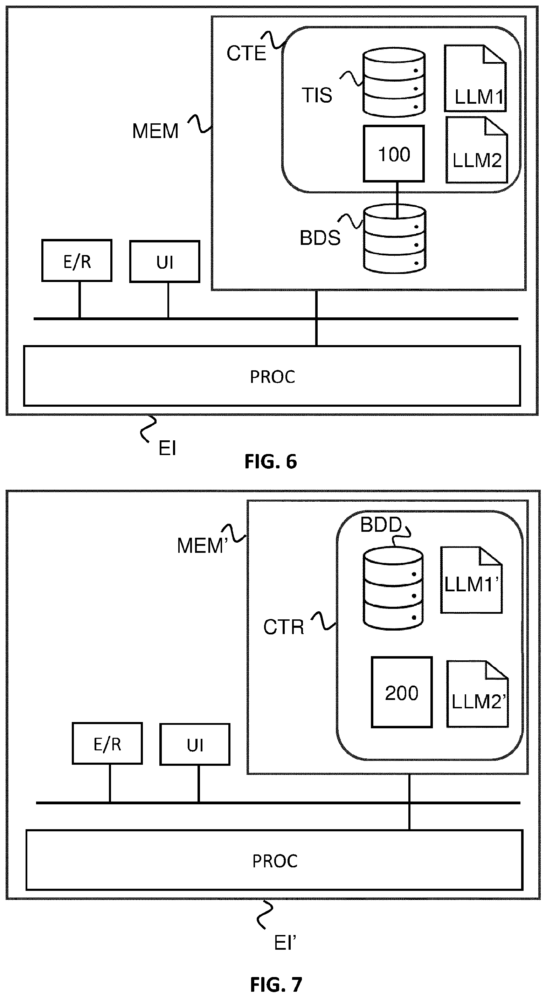

En relation avec la figure 6, on décrit maintenant un système logiciel CTE d'entraînement d'un modèle pour la résolution de tickets d'incidents, selon un ou plusieurs modes de réalisation. Un tel système logiciel comprend au moins le dispositif 100 d'entraînement d'un grand modèle de langage à la résolution de tickets d'incidents qui vient d'être décrit, le grand modèle de langage LLM2 à réentraîner et l'ensemble EIT de tickets précédemment traités par le système de gestion de tickets d'incidents. Le dispositif 100 est configuré pour produire une version réentraînée LLM2' du modèle LLM2 à partir de l'historique de tickets contenu dans l'ensemble EIT. Pour ce faire, il est aussi configuré pour générer une base de données structurées BDS. Selon un mode de réalisation, la base de données structurées BDS et la version réentraînée LLM2' du modèle LLM générés par le dispositif 100 peuvent être intégrés au système logiciel CTE.

Selon un mode de réalisation, le système logiciel CTE comprend aussi le grand modèle de langage LLM1 mis en œuvre par le dispositif 100 pour générer la base de données structurées BDS.

Selon un ou plusieurs modes de réalisation, le système logiciel CTE est encapsulé dans un environnement d'exécution isolé, tel qu'un conteneur logiciel, qui comprend tout ce qui est nécessaire pour que le dispositif 100 puisse s'exécuter, ce qui facilite son installation sur un équipement hôte. Ainsi le mécanisme favorise une exécution portable et reproductible, indépendante du système hôte.

En particulier, il comprend le dispositif 100, dans une forme logicielle comprenant le ou les fichiers d'instructions de code de programme et leur arborescence spécifique, ses dépendances (bibliothèques et autres outils, des fichiers de configuration/paramétrage, des scripts d'initialisation (démarrage, installation, migration de base de données), un environnement d'exécution (par exemple Python, Java, etc), des variables d'environnement. Ainsi ce mécanisme de conteneur logiciel favorise une exécution portable et reproductible, indépendante de l'équipement hôte.

Pour s'exécuter, un conteneur a besoin au minimum d'un processeur, de mémoire vive (RAM) et d'un système d'exploitation hôte avec un moteur de conteneur (comme Docker^{®} par exemple). L'utilisation d'un tel conteneur logiciel permet d'isoler l'environnement d'exécution du dispositif 100, tout en réduisant les ressources requises pour son déploiement, sa duplication ou sa migration.

Un avantage d'un tel conteneur logiciel est qu'il peut être installé sur un équipement informatique physique d'une entreprise client qui exploite la ressource technique, par exemple qui a déployé des serveurs informatiques et s'exécuter localement. De la sorte, il n'est plus nécessaire pour cette entreprise de transmettre des données sensibles relatives à l'activité de l'entreprise sur des réseaux de communication externes.

Cette mise en conteneur est rendue possible par l'utilisation de modèles LLM1 et LLM2 légers adaptés pour s'exécuter sur de petites infrastructures informatiques telles que par exemple un ordinateur fixe domestique équipé d'un GPU adapté à des activités de designer graphique, « gamer », monteur vidéo, etc.

Par exemple, le conteneur CTE est stocké dans une mémoire MEM d'un équipement informatique hôte EI présentant la structure matérielle d'un ordinateur et comprenant au moins un processeur PROC. Selon un mode de réalisation, il comprend en outre une unité de traitement graphique GPU (comprenant une pluralité de cœurs de traitement configurés pour effectuer en parallèle des opérations matricielles. Ce type de processeur est bien adapté et efficace pour entraîner et exécuter des modèles LLM. L'équipement informatique hôte EI comprend aussi une ou plusieurs interfaces de communication COM et utilisateurs (ou homme-machine) UI.

En relation avec la figure 7 on décrit maintenant un système logiciel CTR de résolution de tickets d'incidents selon un ou plusieurs modes de réalisation. Un tel système logiciel comprend au moins le dispositif 200 de résolution de tickets d'incidents qui vient d'être décrit, et la version réentraînée du grand modèle de langage LLM2' produite par le dispositif 100. Selon un mode de réalisation particulier, il comprend aussi la base de données documentaires BDD et le dispositif 200 est configuré pour mettre en œuvre une architecture RAG -LLM comme précédemment décrit en relation avec la figure 5. Selon un ou plusieurs modes de réalisation, le système logiciel CTR est encapsulé dans un environnement d'exécution isolé, tel qu'un conteneur logiciel, avec les mêmes avantages que ceux exposés ci-avant en relation avec la figure 6.

Par exemple, le conteneur CTR est stocké dans une mémoire MEM' d'un équipement informatique hôte EI' présentant la structure matérielle d'un ordinateur et comprenant au moins un processeur PROC', par exemple de type GPU. Selon un mode de réalisation, il s'agit de l'équipement informatique hôte EI qui héberge les deux conteneurs CTE et CTR. Selon ce mode de réalisation, le système logiciel CTR est configuré pour obtenir la version réentraînée du modèle LLM2' produite par le dispositif 100 du système logiciel CTE. Selon un autre mode de réalisation, un seul système logiciel regroupe CTE=CTR regroupe le dispositif 100, le dispositif 200, les modèles LLM1 et LLM2 (puis LLM2'), l'ensemble EIT de tickets, la base de données structurées BDS et la base documentaire BDD.

Chaque fonction, étape, module décrit ci-avant peut être mis en œuvre dans du matériel, des logiciels, des microprogrammes, des intergiciels, des microcodes ou toute combinaison appropriée de ceux-ci. S'ils sont mis en œuvre dans un logiciel, les fonctions ou blocs des schémas fonctionnels et des organigrammes peuvent être mis en œuvre par des instructions de programme d'ordinateur/codes de logiciel, qui peuvent être stockés ou transmis sur un support lisible par ordinateur, ou chargés sur un ordinateur à usage général, un ordinateur à usage spécial ou un autre appareil de traitement programmable et/ou un système, de sorte que les instructions de programme d'ordinateur ou les codes de logiciel qui s'exécutent sur l'ordinateur ou un autre appareil de traitement programmable, créent les moyens de mettre en œuvre les fonctions décrites dans la présente description.

La figure 8 illustre un exemple de structure matérielle d'un dispositif 100, 200 respectivement d'entrainement d'un grand modèle de langage et de résolution d'un ticket d'incident relatif à l'utilisation d'une ressource technique par un utilisateur, selon un ou plusieurs modes de réalisation. Dans cet exemple, le dispositif 100, 200 est configuré pour mettre en œuvre toutes les étapes du procédé correspondant, tel que décrit dans le présent document. En variante, il pourrait aussi mettre en œuvre une partie seulement de ces étapes.

En relation avec la figure 8, le dispositif 100, 200 comprend au moins un processeur 110, 210 et au moins une mémoire 120, 220. Le dispositif 100, 200 peut aussi comprendre une ou plusieurs interfaces de communication. Dans cet exemple, le dispositif 100 comprend des interfaces réseau 130 (par exemple, des interfaces réseau pour l'accès à un réseau câblé / sans fil, y compris une interface Ethernet, une interface WIFI, etc.) connectées au processeur 110, 210 et configurées pour communiquer via un ou plusieurs liens de communication câblés / non câblés et des interfaces homme machine ou utilisateur 140 (par exemple, un clavier, une souris, un écran d'affichage, etc.) connectées au processeur. Le dispositif 100, 200 peut également comprendre un ou plusieurs lecteurs de support 150, 250 pour lire un support de stockage lisible par ordinateur (par exemple, un disque de stockage numérique (CD-ROM, DVD, Blue Ray, etc.), une clé USB, etc.). Le processeur 110, 220 est connecté à chacun des autres composants précités afin d'en commander le fonctionnement.

La mémoire 120, 220 peut comprendre une mémoire vive (RAM), une mémoire cache, une mémoire non volatile, une mémoire de sauvegarde (par exemple, des mémoires programmables ou flash), une mémoire morte (ROM), un disque dur (HDD), un lecteur à état solide (SSD) ou toute combinaison de ceux-ci. La ROM de la mémoire 120, 220 peut être configurée pour stocker, entre autres, un système d'exploitation du dispositif 100, 200 et/ou un ou plusieurs codes de programmes informatiques. La RAM de la mémoire 120, 220 peut être utilisée par le processeur 110, 210 pour le stockage temporaire de données.

Le processeur 110, 220 peut être configuré pour stocker, lire, charger, exécuter et/ou traiter des instructions d'un programme d'ordinateur Pg1, Pg2 stocké dans un support de stockage lisible par ordinateur et/ou dans la mémoire 120 de sorte que, lorsque les instructions sont exécutées par le processeur, le dispositif 100, 200 exécute une ou plusieurs ou toutes les étapes des procédés correspondants décrits dans le présent document. Comme illustré par la figure 8, le dispositif 100, 200 peut être intégré à un équipement informatique hôte EIH.

Bien que les aspects de la présente divulgation aient été décrits en référence à des réalisations particulières, il convient de comprendre que ces réalisations ne font qu'illustrer les principes et les applications de la présente divulgation. Il est donc entendu que de nombreuses modifications peuvent être apportées aux modes de réalisation illustratifs et que d'autres arrangements peuvent être conçus sans s'écarter de l'esprit et de la portée de la divulgation tels que déterminés sur la base des revendications et de leurs équivalents.

Les système, dispositif et procédé qui viennent d'être décrits permettent de proposer automatiquement une suggestion de résolution d'un ticket d'incident émis par un utilisateur. Ils s'appuient sur la puissance d'un grand modèle de langage pour, qui a été spécifiquement réentraîné pour générer une réponse à une question en langage naturel en relation avec des incidents survenus lors de l'utilisation d'une ressource technique donnée.

Les modes de réalisation qui viennent d'être présentés, ainsi que leurs variantes, présentent chacun de nombreux avantages :
- ils traitent automatiquement et sans délai des tickets d'incidents hétérogènes en termes de format, contenu et langue.
- ils ne nécessitent pas d'étiquetage manuel des données d'apprentissage pour le réentrainement ciblé du grand modèle de langage,
- du fait de l'utilisation de modèles d'IA légers, ils peuvent être exécutés dans des environnements contraints en termes de ressources informatiques
- l'ensemble de la solution (entraînement puis inférence) peut s'exécuter localement, dans l'environnement d'utilisation de la ressource technique, ce qui réduit les problèmes de sécurité liés à la manipulation de données sensibles,
- la mise à jour régulière du modèle d'IA est facile et rapide par réentrainement ciblé à partir d'un historique de tickets d'incidents plus récent.

## Revendications

1. Procédé, mis en œuvre par ordinateur, d'entraînement d'un modèle d'intelligence artificielle de type grand Modèle de Langage, LLM, pour la résolution d'un ticket d'incident émis par un utilisateur d'une ressource technique, ledit procédé comportant les étapes suivantes :
- génération (31) d'une base de données d'entraînement structurées représentatives d'un ensemble de tickets d'incidents précédemment traités, les données d'entraînement structurées associées à undit ticket d'incident comprenant des réponses à des questions prédéterminées relatives à l'incident et à la résolution de l'incident, et
- ledit modèle LLM ayant été préalablement entraîné à répondre à des requêtes en langage naturel, réentraînement (32) du modèle LLM, à partir de ladite base de données d'entraînement structurées (BDS), à produire en sortie une suggestion de résolution de l'incident, en réponse à un ticket d'incident présenté en entrée, et
- mise à disposition (33) du modèle LLM réentraîné (LLM2') pour utilisation.

2. Procédé selon la revendication 1, **caractérisé en ce que** la génération (31) de la base de données structurée comprend l'obtention (311) des réponses par application des tickets d'incidents précédemment traités en entrée d'un premier modèle LLM (LLM1) avec les questions prédéterminées et l'enregistrement (312) des réponses obtenues dans une structure de données.

3. Procédé mis en œuvre par ordinateur, de génération d'une suggestion de résolution d'un ticket d'incident, émis par un utilisateur d'une ressource technique, ledit procédé comportant les étapes suivantes :
- Obtention (50) du ticket d'incident saisi par l'utilisateur par l'intermédiaire d'une interface de communication homme-machine,
- Obtention (53) d'une suggestion de résolution du ticket par application d'informations contenues dans le ticket d'incident en entrée d'un modèle LLM préalablement ré-entraîné par le procédé selon l'une quelconque des revendications 1 et 2,
- Mise à disposition (54) de la suggestion de résolution (RS).

4. Procédé selon la revendication 3, **caractérisé en ce qu'**il comprend une étape (52) d'obtention d'informations textuelles relatives à un contexte du ticket d'incident auprès d'une base de données documentaire (BDD) et **en ce que** lesdits éléments sont présentés en entrée du modèle (RAG-LLM) avec le ticket d'entrée.

5. Procédé selon l'une quelconque des revendications 3 et 4, **caractérisé en ce qu'**il comprend en outre une étape d'obtention (51) d'informations contenues dans le ticket d'incident (NT) par application du ticket d'incident en entrée d'un premier modèle LLM (LLM1) avec au moins une question prédéterminée relative à un problème posé dans le ticket d'incident.

6. Dispositif (100) d'entraînement d'un modèle d'intelligence artificielle de type Modèle de Langage Massif, LLM, pour la résolution d'un ticket d'incident émis par un utilisateur d'un service informatique, ledit dispositif étant configuré pour
- générer (GEN) automatiquement une base de données d'entraînement structurées (BDS) représentatives de tickets d'incidents précédemment traités, les données d'entraînement structurées associées à undit ticket d'incident comprenant des réponses à des questions prédéterminées relatives à l'incident et à la résolution de l'incident, et
- ledit modèle LLM (LLM2) étant préalablement entraîné à répondre à des requêtes en langage naturel, réentraîner (RTRN) le modèle LLM, à partir dudit ensemble, à produire en sortie une suggestion de résolution de l'incident, en réponse à un ticket d'incident présenté en entrée,
- mettre à disposition (PRV) le modèle réentraîné (LLM2') pour utilisation.

7. Dispositif (100) selon la revendication précédente, comprenant :
- au moins un processeur ;
et
- au moins une mémoire comprenant un code de programme informatique, au moins une mémoire et le code de programme informatique étant configurés pour, avec au moins un processeur, provoquer l'exécution dudit dispositif.

8. Dispositif (200) de génération d'une suggestion de résolution d'un ticket d'incident, émis par un utilisateur d'un service informatique, ledit dispositif étant configuré pour :
- Obtenir (GET) le ticket d'incident (NT) par l'intermédiaire d'une interface de communication homme-machine,
- Présenter des informations contenues dans le ticket d'incident (NT) en entrée d'un modèle LLM (LLM2') préalablement ré-entraîné par le dispositif (100) selon l'une quelconque des revendication 6 et 7 et obtenir (GET RS) une suggestion de résolution du ticket en sortie,
- Mettre à disposition (PRV) la suggestion de résolution (RS).

9. Dispositif (200) selon la revendication précédente, **caractérisé en ce qu'**il est configuré pour :
- Obtenir (CTX) des éléments d'information textuelle associés à un contexte du ticket d'incident auprès d'une base de données documentaire (BDD) et **en ce que** lesdits éléments sont présentés en entrée du modèle (LLM2') avec le ticket d'entrée.

10. Dispositif (200) selon l'une quelconque des revendications 8 à 9, **caractérisé en ce qu'**il est en outre configuré pour obtenir lesdites informations contenues dans le ticket d'incident (NT) par application du ticket d'incident en entrée d'un premier modèle LLM (LLM1, LLM1) avec au moins une question prédéterminée relative à un problème posé dans le ticket d'incident (NT).

11. Dispositif (200) selon l'une quelconque des revendications 8 à 10, comprenant :
- au moins un processeur ; et
- au moins une mémoire comprenant un code de programme informatique, la au moins une mémoire et le code de programme informatique étant configurés pour, avec l'au moins un processeur, provoquer l'exécution dudit dispositif.

12. Système logiciel (CTE) d'entraînement d'un modèle pour la résolution de tickets d'incidents, comprenant :
- le dispositif (100) selon l'une quelconque des revendications 6 et 7,
- la base de données d'entraînement structurées (BDS), et
- un modèle LLM (LLM2) destiné à être re-entraîné par le dispositif (100).

13. Système logiciel (CTR) de génération d'une suggestion de résolution de tickets d'incidents, comprenant
- Le dispositif (200) de résolution de tickets d'incidents selon l'une quelconque des revendications 8 à 10, et
- Le modèle (LLM2') ré entrainé.

14. Programme d'ordinateur (Pg1, Pg2) comportant des instructions qui lorsqu'elles sont exécutées par un processeur mettent en œuvre le procédé selon l'une quelconque des revendications 1 à 5.

15. Support d'enregistrement non volatile et lisible par un ordinateur, sur lequel est enregistré le système logiciel (CTE, CTR) selon l'une quelconque des revendications 12 à 13.
